# EUROPÄISCHE PATENTSCHRIFT

(11) **EP 0 442 981 B1**
(45) Veröffentlichungstag und Bekanntmachung des Hinweises auf die Patenterteilung: **29.09.1993**
(21) Anmeldenummer: 90910577.7
(22) Anmeldetag: 28.07.1990
(51) Int. Cl.: F02B 47/10

(54) **BRENNKRAFTMASCHINE**
INTERNAL COMBUSTION ENGINE
MOTEUR A COMBUSTION INTERNE

(30) Priorität: 11.09.1989 DE 3930243
(43) Veröffentlichungstag der Anmeldung: 28.08.1991
(73) Patentinhaber: ROBERT BOSCH GMBH, 70442 Stuttgart (DE)
(72) Erfinder: GRIESHABER, Hermann, D-7447 Aichtal-Aich (DE); POLACH, Wilhelm, D-7141 Moeglingen (DE)
(86) Internationale Anmeldenummer: DE9000586
(87) Internationale Veröffentlichungsnummer: WO9103634

(56) Entgegenhaltungen:
- WO-A-89/00241
- DE-A- 3 011 580
- US-A- 4 323 045

## Beschreibung

Bei einer durch die US-A-4 323 045 bekannten Brennkraftmaschine dieser Art ist zur Abgasrückführung eine Abgasrückführleitung vorgesehen, die vom Abgassammelsystem ab über ein Abgasrückführmengensteuerventil zu einem Abgasverteiler führt, von dem aus Einzelleitungen jeweils in dem Bereich der Saugrohre vor den Einlaßventilen mündet. Mit einer solchen Abgasrückführvorrichtung wird bei guter Durchmischung der Abgasmenge mit dem zugeführten Kraftstoffluftgemisch die Stickoxyd-Emission im Abgas deutlich reduziert.

Bei hochaufgeladenen NKW-Motoren hat man bislang auf den Einsatz einer Abgasrückführvorrichtung verzichtet, weil der Motorverschleiß infolge Verschmutzung zunimmt, der Abgasgegendruck bei hoher Last niedriger ist als der Ladedruck des Ladeluftverdichters und weil Ladeluftkühler und Verdichter verschmutzen und dadurch ihr Wirkungsgrad deutlich abnimmt. Die Einhaltung von geforderten Abgasgrenzwerten bezüglich der Stickoxyd-Emission wird hier durch Ladeluftkühlung, Hochaufladung und sehr spätem Spritzbeginn der Kraftstoffeinspritzpumpe erreicht. Wegen des späten Spritzbeginns muß allerdings eine Erhöhung des Kraftstoffverbrauchs von ca. 10 - 20% in Kauf genommen werden.

### Vorteile der Erfindung

Die erfindungsgemäße Brennkraftmaschine mit den kennzeichnenden Merkmalen des Anspruchs 1 hat den Vorteil, daß die von dem Abgas, das in die Ansaugluft der Zylinder gelangt, beaufschlagte Oberfläche der Abgasrückführvorrichtung vergleichsweise klein ist und damit verschmutzungs- und korrisionsgeschützt ausgeführt werden kann. Der Ladeluftkühler und der Ladeluftverdichter werden nicht mit Abgas beaufschlagt und können damit nicht verschmutzen. Somit kann die Brennkraftmaschine als NKW-Motor konzipiert werden, ohne daß die Gefahr der Verschmutzung durch die Abgasrückführung besteht. Infolge der durch die Abgasrückführung erzielten Emissionsreduktion kann der Spritzbeginn der Kraftstoffeinspritzpumpen wieder auf einen früheren Zeitpunkt eingestellt werden, so daß der Kraftstoffverbrauch gegenüber NKW-Motoren mit sehr spätem Spritzbeginn bei gleich niedrigem Stickoxydausstoß deutlich sinkt.

Die Abgasrückführung ist unabhängig vom Druckgefälle zwischen Abgas- und Ansaugrohr. Der Abgasabtransport in den Abgasverteiler ist immer sichergestellt. Damit kann der Abgasturbolader thermodynamisch, d.h. mit gegenüber dem Abgasgegendruck höherem Ladedruck, ausgelegt werden.

Die tangentiale Zuführung des Abgases am Einlaßventil bewirkt eine Vorlagerung des Abgases - auch bei stoßweisem Anfall der Abgasmenge - vor das Einlaßventil. Beim Öffnen des Einlaßventils wird zunächst Abgas und dann Frischluft mit Kraftstoff angesaugt. Die Vermischung erfolgt im Zylinder. Eine gleichmäßige Verteilung und gute Verbrennung ist damit sichergestellt.

Durch die in den weiteren Ansprüchen aufgeführten Maßnahmen sind vorteilhafte Weiterbildungen und Verbesserungen der im Anspruch 1 angegebenen Brennkraftmaschine möglich.

Die Abgasmenge im Abgasverteiler fällt infolge der Verbindung mit nur einem Zylinder der Brennkraftmaschine stoßweise an. Um gleichmäßige Aufteilung der abgasmengen auf alle Zylinder zu erreichen, sind gemäß einer weiteren Ausführungsform der Erfindung einerseits die Endrohre so dimensioniert, daß in jedes Ansaugrohr eine gleich große Abgasmenge einströmt und andererseits die Ansaugrohre so ausgebildet, daß das Volumen zwischen Ansaugsammelrohr und Einlaßventil etwa dem fünf- bis zehnfachen der maximal zugeführten Abgasmenge ist.

Durch die wärmeisolierte Ausführung des Abgasverteilers aus korrosionsbeständigem Material wird eine Verschmutzung des Abgasverteilers - mit Ausnahme einer leichten Rußschicht - vermieden.

Gemäß einer zweckmäßigen Ausführungsform der Erfindung wird zwischen dem Abgasrohr und dem Abgasverteiler einer Abgasreinigungsvorrichtung angeordnet. Bei Vorsehen einer elektrostatischen Rußweiche mit nachgeschaltetem Fliehkraftabscheider tritt der weitgehend partikelfreie Kernstrom in den Abgasverteiler und der partikelbeladene Abgasteilstrom in das Abgassammelrohr ein. Dadurch wird auch die geringe Rußablagerung im Abgasverteiler unterbunden.

Zur Regelung des CO₂-Gehalts im Abgas, der je nach Betriebsbedingungen der Brennkraftmaschine recht unterschiedlich ist, ist gemäß einer weiteren Ausführungsform der Erfindung die dem Abgasverteiler zugeführte Abgasmenge steuerbar und auch ganz absperrbar. Eine Möglichkeit der Veränderung der Abgasrückführrate besteht darin, daß die Einspritzmenge des mit dem Abgasverteiler verbundenen Zylinders verändert wird, wenn der CO₂-Gehalt im Abgas und damit auch der der Zylinderladung zu hoch oder zu niedrig wird. Bei kleiner Last und im Leerlauf wird eine Abgasrate von ca. 15% vorgegeben. Bei hoher Last ist dieser Anteil zu hoch und wird durch Verringerung der Einspritzmenge angepaßt. Allerdings muß ein Leistungsverlust von ca. 5% in Kauf genommen werden. Die Mengenanpassung erfolgt durch entsprechende Ansteuerung der Kraftstoffeinspritzpumpe.

Bei kaltem Motor und niedriger Last wird zur Vermeidung von Blaurauch und hoher Kohlenwasserstoff-Emission die Abgasrückführung unterbunden.

Dies kann gemäß einer Ausführungsform der Erfindung durch ein zwischen Abgasrohr und Abgasverteiler angeordnetes 3/2-Wegeventil bewirkt werden, das in der einen Schaltstellung das Abgasrohr mit dem Abgasverteiler und in der anderen Schaltstellung das Abgasrohr mit dem Abgassammelrohr verbindet.

Wird die Brennkraftmaschine mit einer Zylinderabschaltung für Kaltstart und niedriger Last betrieben, so erfolgt gemäß einer weiteren Ausführungsform der Erfindung die Unterbindung der Abgasrückführung zweckmäßigerweise dadurch, daß der mit dem Abgasverteiler verbundene Zylinder der Gruppe der abschaltbaren Zylinder zugeordnet wird.

Gemäß einer bevorzugten Ausführungsform der Erfindung kann aber auch in dem mit dem Abgasverteiler verbundenen Zylinder ein weiteres Auslaßventil vorgesehen werden, dessen Auslaßöffnung über ein separates Abgasrohr mit dem Abgassammelrohr verbunden ist. Die beiden Auslaßventile kennen über eine hydraulische Ventilabschaltung bekannter Art je nach Bedarf zu- oder abgeschaltet werden. Auf diese Weise kann bei Vollast oder wenn die Brennkraftmaschine kurzzeitig ein sehr hohes Drehmoment abgeben soll, die Abgasrückführung gestoppt werden. Bei einer entsprechenden Hubsteuerung der Ventile läßt sich die Abgasrückführrate auch steuern. Im Kaltbetrieb kann damit auf die an sich notwendige Zylinderabschaltung verzichtet werden.

Zusammengefaßt ergibt sich durch die erfindungsgemäße Abgasrückführung bei als NKW-Motoren ausgebildeten Brennkraftmaschinen folgenden Vorteile:
- Verbesserung des Kraftstoffverbrauchs bei niedriger Stickoxyd-Emission,
- kleiner Spritzverstellerbereich,
- Möglichkeit der Auslegung des Abgasturboladers für hohe Nennleistung.

### Zeichnung

Die Erfindung ist anhand von in der Zeichnung dargestellten Ausführungsbeispielen in der nachfolgenden Beschreibung näher erläutert. Es zeigen jeweils als Prinzipskizze:
- Fig. 1: eine sechszylindrige Brennkraftmaschine mit Luftansaug- und Abgassystem,
- Fig. 2 bis 4: jeweils ausschnittweise eine Brennkraftmaschine wie in Fig. 1 gemäß weiterer Ausführungsbeispiele.

### Beschreibung der Ausführungsbeispiele

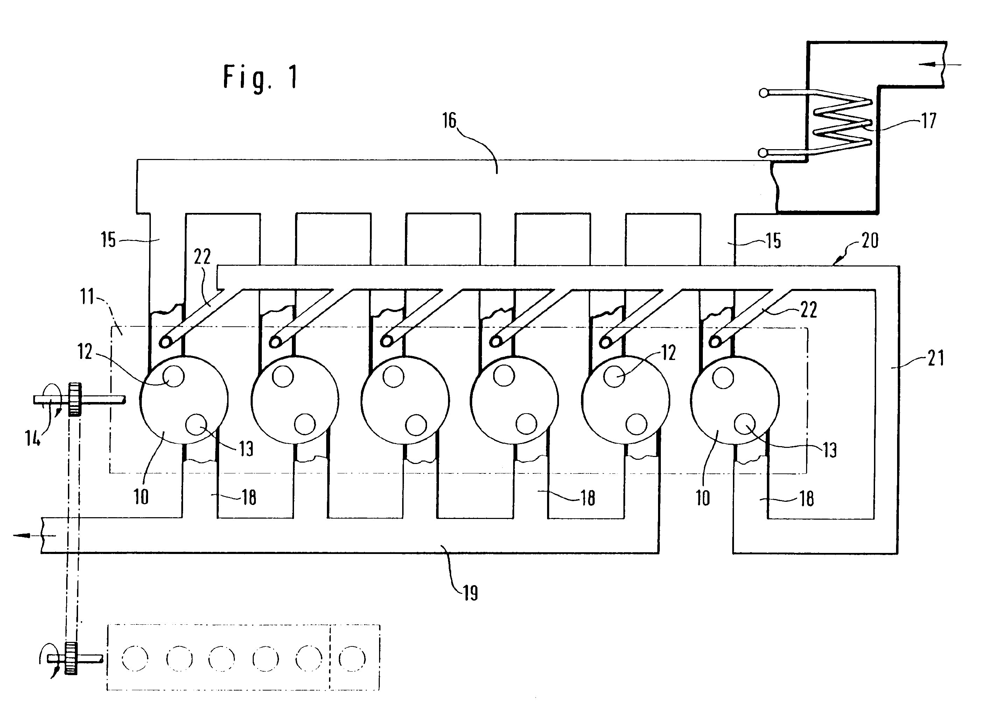

Die in Fig. 1 nur prinzipiell skizzierte Brennkraftmaschine weist sechs Zylinder 10 auf, die in einem Motorblock 11 zusammengefaßt sind. Jeder Zylinder 10 hat ein Einlaßventil 12 und ein Auslaßventil 13. Ein- und Auslaßventile 12,13 der Zylinder 10 werden über eine mit 14 angedeutete Nockenwelle gesteuert. Die Einlaßöffnungen der Einlaßventile 12 sind über Ansaugrohre 15 mit einem Ansaugsammelrohr 15 verbunden. Das Ansaugsammelrohr 16 wird von einem nicht dargestellten Turbolader oder Ladeluftverdichter beaufschlagt und ist mit einem Ladeluftkühler 17 ausgerüstet. Von der Auslaßöffnung eines jedes Auslaßventils 13 führt ein Abgasrohr 18 zu einem Abgassammelrohr 19.

Zur Senkung der Stickoxyd-Emission ist eine Abgasrückführvorrichtung 20 vorgesehen, die einen Abgasverteiler 21 aufweist. Vom Abgasverteiler 21 zweigt eine der Anzahl der Zylinder 10 entsprechende Zahl von Endrohren 22 ab, die jeweils zu einem der Zylinder 10 führen. Jedes Endrohr 22 mündet in dem dem Zylinder 10 zugeordneten Ansaugrohr 15 unmittlbar vor dem Einlaßventil 12, und zwar tangential zur Einlaßöffnung des Einlaßventils 12. Das Abgasrohr 18 des letzten Zylinders 10 ist von dem Abgassammelrohr 19 abgetrennt und mit dem Eingang des Abgasverteilers 21 verbunden. Der Abgasverteiler 21 ist aus korrosionsbeständigem Material hergestellt und wärmeisoliert ausgeführt. Die Endrohre 22 sind so dimensioniert, daß in jedes Ansaugrohr 15 eine gleich große Abgasmenge aus dem Abgasverteiler 21 einströmt. Da nur ein Zylinder 10 an den Abgasverteiler 21 angeschlossen ist, fällt das Abgas im Abgasverteiler 21 stoßweise an. Um es trotzdem gleichmäßig auf alle Zylinder 10 zu verteilen, sind die Ansaugrohre 15 so dimensioniert, daß das zwischen dem Einlaßventil 12 und dem Ansaugsammelrohr 16 vorhandene Volumen im Ansaugrohr 15 etwa dem fünf- bis zehnfachen der dem Ansaugrohr 15 zugeführten Abgasmenge entspricht. Durch die Mündung der Endrohre 22 unmittelbar vor den Einlaßventilen 12 wird die zugeführte Abgasmenge auch bei der stoßweisen und nicht im Ansaugtakt erfolgenden Zuführung dem Einlaßventil 12 vorgelagert. öffnet das Ventil während des Ansaugtaktes des Zylinders 10, wird zunächst die Abgasmenge und dann Frischluft angesaugt. Die Vermischung erfolgt im Zylinder 10, so daß eine gleichmäßige Verteilung im Brennraum sichergestellt ist.

Die dem Abgasverteiler 21 zugeführte Abgasmenge ist steuerbar und auch für bestimmte Betriebsbedingungen der Brennkraftmaschine ganz absperrbar. Bei kleinen Lasten und im Leerlauf wird die Abgasrückführrate etwa auf 15% der Abgasmenge festgelegt. Dieser Anteil ist bei hoher Last zu groß. Zur Reduktion wird die von einer Kraftstoffeinspritzpumpe zugemessene Kraftstoffeinspritzmenge des sechsten Zylinders 10 entsprechend reduziert, so daß die Abgasrückführrate bis auf ca. 10% absinkt. Allerdings muß hierbei ein Leistungsverlust von ca. 5% in Kauf genommen werden. Die gegenüber den anderen fünf Zylindern 10 veränderte Einspritzmenge führt natürlich auch zu einer verringerten Drehmoment-Abgabe des sechsten Zylinders 10. Bei hohen Lasten führt dies jedoch zu keinen nennenswerten Störungen.

Bei kalter Brennkraftmaschine und niedriger Last wird die rückgeführte Abgasmenge gesperrt. Besitzt die Brennkraftmaschine ohnehin für diesen Fall eine Zylinderabschaltung, so kann die Sperrung der Abgasfückführmenge dadurch bewirkt werden, daß der sechste Zylinder der Gruppe der abschaltbaren Zylinder zugeordnet wird. Verfügt die Brennkraftmaschine nicht über eine solche Zylinderabschaltung, so kann der sechste Zylinder auch durch Sperren der Kraftstoffeinspritzung abgeschaltet werden.

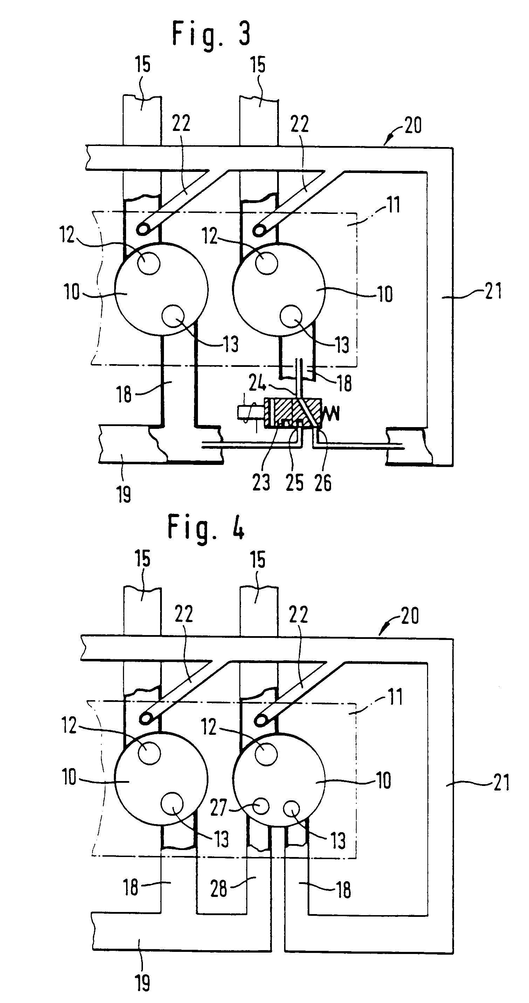

In dem in Fig. 3 abschnittweise dargestellten weiteren Ausführungsbeispiel einer Brennkraftmaschine wird eine Abschaltung der Abgasrückführmenge bei kalter Brennkraftmaschine und niedriger Last durch ein 3/2-Wegeventil 23 erreicht. Das beispielsweise als Magnetventil ausgebildete 3/2-Wegeventil 23 weist drei gesteuerte Anschlüsse 24 - 26 auf, von denen der Anschluß 24 mit dem Abgasrohr 13 des sechsten Zylinders , der Anschluß 25 mit dem Eingang des Abgasverteilers 21 und der Anschluß 26 mit dem Abgassammelrohr 19 verbunden ist. Je nach Schaltstellung des 3/2-Wegeventils 23 wird das Abgasrohr 18 mit dem Abgasverteiler 21 oder dem Abgassammelrohr 19 verbunden.

Eine andere Möglichkeit der Steuerung der Abgasrückführmenge bzw. der Abschaltung der Abgasrückführung weist die in Fig. 4 abschnittweise schematisch skizzierte Brennkraftmaschine auf. Hier ist der sechste Zylinder 10 mit einem zweiten Auslaßventil 27 versehen, dessen Auslaßöffnung über ein separates Abgasrohr 28 an die Abgassammelleitung 19 angeschlossen ist. Die beiden Auslaßventile 13,27 werden über eine bekannte hydraulische Ventilabschaltung je nach Bedarf zu- oder abgeschaltet. Dadurch kann die Abgasrückführung bei Vollast der Brennkraftmaschine oder wenn diese kurzzeitig ein sehr hohes Drehmoment abgeben soll, stillgelegt werden. Bei einer entsprechenden Hubsteuerung der beiden Auslaßventile 13,14 läßt sich auch die Rate der rückgeführten Abgasmenge steuern.

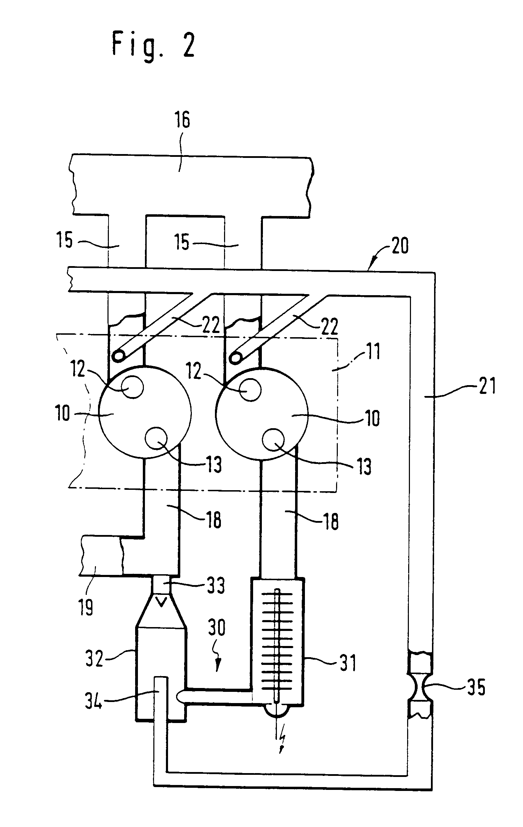

Bei der in Fig. 2 ausschnittweise und schematisch skizzierten Brennkraftmaschine ist zwischen dem zu dem Abgasverteiler 21 führenden Abgasrohr 18 des sechsten Zylinders 10 und dem Abgasverteiler 21 eine Abgasreinigungsvorrichtung 30 eingeschaltet, die hier als elektrostatische Rußweiche ausgebildet ist. Eine solche elektrostatische Rußweiche ist beispielsweise in der DE 35 02 448 Al beschrieben. Sie besteht aus einem Elektrofilter 31 und einem nachgeschalteten Fliehkraftabscheider 32, auch Zyklon genannt. Im Elektrofilter 31 koagulieren die im Abgas enthaltenen Partikel zu größeren Agglomeraten, die dann unter Einwirkung der Fliehkraft im Fliehkraftabscheider 32 an den Wänden abgeschieden werden und zu einem Auslaß 33 wandern. Das im Kern des Fliehkraftabscheiders 32 befindliche Abgas strömt als weitgehend partikelfreier Abgasstrom über ein zentrales Tauchrohr 34 in den Abgasverteiler 21. Der Auslaß 33, über den ein Abgasteilstrom die abgeschiedenen Agglomerate ausbringt (Schmutzgasstrom), ist mit dem Abgassammelrohr 19 verbunden. Die für die Wirkung des Fliehkraftabscheiders 32 erforderlichen Druckverhältnisse werden durch eine fest eingestellte Drossel 35 sichergestellt, die in der Verbindung zwischen Tauchrohr 34 und Abgasverteiler 21 angeordnet ist.

## Patentansprüche

1. Brennkraftmaschine, insbesondere Dieselbrennkraftmaschine, mit mindestens vier, jeweils ein Einlaßventil (12) und Auslaßventil (13) aufweisenden Zylindern (10), mit einem Ansaugsammelrohr (16) und von diesem zu jeweils einem der Zylinder führenden Ansaugrohren (15), die im Bereich der Einlaßöffnungen der Einlaßventile (12) münden, mit einem Abgassammelrohr (19) und von diesem zu jeweils einem der Zylinder führenden Abgasrohren (18), die von den Auslaßöffnungen der Auslaßventile abgehen, und mit einer Abgasrückführvorrichtung (26) zur Reduktion der Schadstoffemission, die einen mit Abgas der Brennkraftmaschine versorgten Abgasverteiler (21) aufweist, von dem eine der Zylinderzahl entsprechende Anzahl von Endrohren (22) abzweigt, die in jeweils einem der Ansaugrohre (15) unmittelbar vor dem Einlaßventil (12) münden, dadurch gekennzeichnet, daß zur Versorgung des Äbgasverteilers (20) mit Abgas ein Abgasrohr (18) eines der Zylinder (10) von dem Abgassammelrohr (19) abgetrennt und an dem Abgasverteiler (21) angeschlossen ist.

2. Brennkraftmaschine nach Anspruch 1, dadurch gekennzeichnet, daß die Endrohre (22) des Abgasverteilers (21) so dimensioniert sind, daß in jedes Ansaugrohr (15) eine gleich große Abgasmenge einströmt.

3. Brennkraftmaschine nach Anspruch 1 oder 2, dadurch gekennzeichnet, daß jedes Ansaugrohr (15) so ausgebildet ist, daß das zwischen Ansaugsammelrohr (16) und Einlaßventil (12) vorhandene Rohrvolumen etwa dem fünf- bis zehnfachen der maximal zugeführten Abgasmenge ist.

4. Brennkraftmaschine nach einem der Ansprüche 1 - 3, dadurch gekennzeichnet, daß der Abgasverteiler (21) aus korrosionsbeständigem Material hergestellt und wärmeisoliert ausgeführt ist.

5. Brennkraftmaschine nach einem der Ansprüche 1 - 4, dadurch gekennzeichnet, daß zwischen dem Abgasrohr (18) und dem Abgasverteiler (21) eine Abgasreinigungsvorrichtung (30), insbesondere eine elektrostatische Rußweiche, angeordnet ist.

6. Brennkraftmaschine nach Anspruch 5, dadurch gekennzeichnet, daß ein einen partikelangereicherten Abgasstrom führender erster Auslaß (33) der Abgasreinigungsvorrichtung (30) mit dem Abgassammelrohr (19) und einen gereinigten Abgasstrom führender zweiter Auslaß (34) der Abgasreinigungsvorrichtung (30) mit dem Abgasverteiler (21) verbunden ist und daß zwischen dem zweiten Auslaß (34) und dem Abgasverteiler (31) eine Drossel (35) angeordnet ist.

7. Brennkraftmaschine nach einem der Ansprüche 1 - 6, dadurch gekennzeichnet, daß die dem Abgasverteiler (21) zugeführte Abgasmenge steuerbar und/oder absperrbar ist.

8. Brennkraftmaschine nach Anspruch 7, dadurch gekennzeichnet, daß zwischen dem Abgasrohr (18) und dem Abgasverteiler (21) ein 3/2-Wegeventil (23) mit drei gesteuerten Anschlüssen angeordnet ist, von denen der erste Anschluß (24) mit dem Abgasrohr (18), der zweite Anschluß (25) mit dem Abgasverteiler (21) und der dritte Anschluß (26) mit dem Abgassammelrnhr (19) verbunden ist, und daß das 3/2-Wegeventil (23) den ersten Anschluß (24) in seiner einen Schaltstellung mit dem zweiten Anschluß (25) und in seiner anderen Schaltstellung mit dem dritten Anschluß (26) verbindet.

9. Brennkraftmaschine nach Anspruch 7, dadurch gekennzeichnet, daß in dem mit dem Abgasverteiler (21) verbundenen Zylinder (10) ein zweites Auslaßventil (27) vorgesehen ist, dessen Auslaßöffnung über ein zweites Abgasrohr (28) mit dem Abgassammelrohr (19) verbunden ist.

10. Brennkraftmaschine nach Anspruch 1 mit Zylinderabschaltung für Kaltbetrieb, dadurch gekennzeichnet, daß der mit dem Abgasverteiler (21) verbundene Zylinder (10) der Gruppe der abschaltbaren Zylinder (10) zugeordnet ist.

## Claims

1. Internal combustion engine, in particular diesel internal combustion engine, with at least four cylinders (10), each having an inlet valve (12) and an exhaust valve (13), with an induction manifold (16) and induction pipes (15), each leading from the induction manifold (16) to one of the cylinders, which induction pipes (15) open into the region of the inlet openings of the inlet valves (12), with an exhaust manifold (19) and exhaust pipes (18), each leading from the exhaust manifold (19) to one of the cylinders, which exhaust pipes (18) emerge from the outlet openings of the exhaust valves, and with an exhaust gas recirculation appliance (26) to reduce the pollutant emission, which exhaust gas recirculation appliance (26) has an exhaust gas distributor (21) supplied with exhaust gas from the internal combustion engine, a number of end pipes (22), corresponding to the number of cylinders, branching off from the exhaust gas distributor (21), each of which end pipes (22) opens into one of the induction pipes (15) immediately before the inlet valve (12), characterised in that an exhaust pipe (18) of one of the cylinders (10) is separated from the exhaust manifold (19) and connected to the exhaust gas distributor (21) in order to supply the exhaust gas distributor (21) with exhaust gas.

2. Internal combustion engine according to Claim 1, characterised in that the end pipes (22) of the exhaust gas distributor (21) are dimensioned in such a way that an equally large quantity of exhaust gas flows into each induction pipe (15).

3. Internal combustion engine according to Claim 1 or 2, characterised in that each induction pipe (15) is configured in such a way that the pipe volume present between induction manifold (16) and inlet valve (12) is approximately five times to ten times the maximum quantity of exhaust gas supplied.

4. Internal combustion engine according to one of Claims 1-3, characterised in that the exhaust gas distributor (21) is manufactured from corrosion-resistant material and embodied so as to be thermally insulated.

5. Internal combustion engine according to one of Claims 1-4, characterised in that an exhaust gas cleaning appliance (30), in particular an electrostatic soot deflector, is arranged between the exhaust pipe (18) and the exhaust gas distributor (21).

6. Internal combustion engine according to Claim 5, characterised in that a first outlet (33) of the exhaust gas cleaning appliance (30) carrying a particle-enriched exhaust gas flow is connected to the exhaust manifold (19) and a second outlet (34) of the exhaust gas cleaning appliance (30) carrying a clean exhaust gas flow is connected to the exhaust gas distributor (21) and in that a throttle (35) is arranged between the second outlet (34) and the exhaust gas distributor (21).

7. Internal combustion engine according to one of Claims 1-6, characterised in that the exhaust gas quantity supplied to the exhaust gas distributor (21) can be controlled and/or shut off.

8. Internal combustion engine according to Claim 7, characterised in that a 3/2-way valve (23) with three controlled connections is arranged between the exhaust pipe (18) and the exhaust gas distributor (21), of which connections the first connection (24) is connected to the exhaust pipe (18), the second connection (25) is connected to the exhaust gas distributor (21) and the third connection (26) is connected to the exhaust manifold (19), and in that the 3/2-way valve (23) connects the first connection (24) to the second connection (25) in one of its switching positions and to the third connection (26) in its other switching position.

9. Internal combustion engine according to Claim 7, characterised in that a second exhaust valve (27) is provided in the cylinder (10) connected to the exhaust gas distributor (21), the outlet opening of which exhaust valve (27) is connected to the exhaust manifold (19) via a second exhaust pipe (28).

10. Internal combustion engine according to Claim 1, with cylinder switch-off for cold operation, characterised in that the cylinder (10) connected to the exhaust gas distributor (21) is associated with the group of cylinders (10) which can be switched off.

## Revendications

1. Moteur thermique notamment moteur diesel comportant au moins quatre cylindres (10) ayant chacun une soupape d'admission (12) et une soupape d'échappement (13), un collecteur d'admission (16) d'où partent vers chacun des cylindres des tubulures d'aspiration (15) débouchant au niveau des ouvertures d'admission des soupapes d'admission (12), un collecteur d'échappement (19) et partant de celui-ci, des tubulures d'échappement (18) conduisant à chacun des cylindres et partant des orifices d'échappement des cylindres, ainsi qu'un dispositif de ré-injection de gaz d'échappement (26) pour réduire l'émission en composants nocifs, ayant un distributeur de gaz d'échappement (21) recevant des gaz d'échappement du moteur thermique et dont dérive un nombre d'embouts (22) correspondant au nombre des cylindres, ces embouts débouchant respectivement dans les tubulures d'aspiration (15) directement en amont de la soupape d'admission (12), moteur caractérisé en ce que pour l'alimentation du distributeur de gaz d'échappement (20) en gaz d'échappement, une tubulure de gaz d'échappement (18) à l'un des cylindres (10) est raccordée séparément du collecteur d'échappement (19) sur le distributeur de gaz d'échappement (21).

2. Moteur thermique selon la revendication 1, caractérisé en ce que les embouts (22) du distributeur de gaz d'échappement (21) sont dimensionnés pour que chaque tubulure d'aspiration (15) reçoive une même quantité de gaz d'échappement.

3. Moteur thermique selon la revendication 1 ou 2, caractérisé en ce que chaque tubulure d'aspiration (15) est conçue pour qu'entre le collecteur d'aspiration (16) et la soupape d'admission (12), le volume tubulaire existant représente sensiblement de 5 à 10 fois la quantité maximale de gaz fournie.

4. Moteur thermique selon l'une des revendications 1 à 3, caractérisé en ce que le distributeur de gaz d'échappement (21) est réalisé en un matériau résistant à la corrosion et isolé thermiquement.

5. Moteur thermique selon l'une des revendications 1 à 4, caractérisé en ce que la tubulure d'échappement (18) et le distributeur de gaz d'échappement (21) on a un dispositif de nettoyage des gaz d'échappement (30) notamment un séparateur électrostatique des suies.

6. Moteur thermique selon la revendication 5, caractérisé par une première sortie (33) du dispositif de nettoyage des gaz d'échappement (30) conduisant à une vanne d'échappement riche en particules, est reliée au collecteur de gaz d'échappement (19) et une seconde sortie (34) du dispositif de nettoyage des gaz d'échappement (30) conduisant un flux de gaz d'échappement nettoyé, est reliée au distributeur de gaz d'échappement (21) et en ce qu'un organe d'étranglement (35) est prévu entre la seconde sortie (34) et le distributeur de gaz d'échappement (31).

7. Moteur thermique selon l'une des revendications 1 à 6, caractérisé en ce que la quantité des gaz d'échappement alimentant le distributeur de gaz d'échappement (21) peut être commandée ou coupée.

8. Moteur thermique selon la revendication 7, caractérisé en ce qu'entre la tubulure d'échappement (18) et le distributeur de gaz d'échappement (21) il est prévu un distributeur à tiroir à trois/deux voies (23) avec trois branchement commandés, le premier branchement (24) étant relié à la tubulure d'échappement (18), le second branchement (25) étant relié au distributeur de gaz d'échappement (21) et le troisième branchement (26) est relié au collecteur d'échappement (19) et en ce que le distributeur à trois/deux voies (23) relie le premier branchement (24) dans sa première position de commutation au second branchement (25) et dans son autre position de commutation, il établit la liaison avec le troisième branchement (26).

9. Moteur thermique selon la revendication 7, caractérisé par une seconde soupape d'échappement (27) dans le cylindre (10) relié au distributeur de gaz d'échappement (21), l'orifice de sortie de cette seconde soupape étant relié par une seconde tubulure d'échappement (28) au collecteur d'échappement (19).

10. Moteur thermique selon la revendication 1 avec une coupure de cylindre pour le fonctionnement à froid, moteur caractérisé en ce que le cylindre (10) relié au distributeur de gaz d'échappement (21) est associé au groupe des cylindres (10) susceptibles d'être mis hors circuit.
